(19) **Europäisches Patentamt / European Patent Office / Office européen des brevets**

(11) **EP 2 506 352 B1**

(12) **EUROPEAN PATENT SPECIFICATION**

(45) Date of publication and mention
of the grant of the patent:
**04.01.2017 Bulletin 2017/01**

(21) Application number: **10833195.0**

(22) Date of filing: **24.11.2010**

(51) Int Cl.:
*H01M 8/10 (2006.01)*     *H01M 4/86 (2006.01)*
*H01M 4/88 (2006.01)*     *H01M 8/02 (2006.01)*
*D21H 13/50 (2006.01)*     *D04H 1/46 (2012.01)*
*D04H 1/48 (2012.01)*     *D21H 13/12 (2006.01)*
*D21H 15/10 (2006.01)*     *H01M 4/92 (2006.01)*

(86) International application number:
**PCT/JP2010/070862**

(87) International publication number:
**WO 2011/065349 (03.06.2011 Gazette 2011/22)**

(54) **POROUS ELECTRODE BASE MATERIAL AND PROCESS FOR PRODUCTION THEREOF**

PORÖSES ELEKTRODENBASISMATERIAL UND HERSTELLUNGSVERFAHREN DAFÜR

MATÉRIAU DE BASE POREUX POUR ÉLECTRODE ET PROCÉDÉ DE FABRICATION DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.11.2009 JP 2009266278
12.07.2010 JP 2010157824**

(43) Date of publication of application:
**03.10.2012 Bulletin 2012/40**

(73) Proprietor: **Mitsubishi Rayon Co., Ltd.
Minato-ku
Tokyo 108-8506 (JP)**

(72) Inventors:
• **SUMIOKA, Kazuhiro
Toyohashi-shi
Aichi 440-8601 (JP)**

• **TATSUNO, Hiroto
Toyohashi-shi
Aichi 440-8601 (JP)**

(74) Representative: **Hoffmann Eitle
Patent- und Rechtsanwälte PartmbB
Arabellastraße 30
81925 München (DE)**

(56) References cited:
EP-A1- 1 502 992     EP-A1- 1 788 651
EP-A2- 1 538 689     JP-A- 2001 240 477
JP-A- 2003 183 962     JP-A- 2004 363 018
JP-A- 2005 273 051     JP-A- 2006 040 575
JP-A- 2009 087 616     US-A1- 2008 268 297

## Description

Technical Field

The present invention relates to a porous electrode substrate used for a polymer electrolyte fuel cell using gas and liquid fuels, and a method for producing the same.

Background Art

A gas diffusion electrode substrate installed in a fuel cell has conventionally been a porous electrode substrate composed of a paper-like carbon/carbon composite obtained by forming short carbon fibers into paper, then binding the short carbon fibers to each other with an organic polymer, and firing the paper at high temperature to carbonize the organic polymer, in order to increase mechanical strength (see Patent Literature 1). On the other hand, for the purpose of achieving lower cost, a porous electrode substrate obtained by forming short oxidized fibers into paper, and firing the paper at high temperature to carbonize the short oxidized fibers is proposed (see Patent Literature 2). In addition, a proposal has been made (see Patent Literature 3) for mat that includes a plurality of carbon fibers; and a porous electrode substrate that is obtained by incorporating a plurality of acrylic pulp fibers into the carbon fiber mat and then by curing and carbonizing them. Further, a porous electrode substrate including a non-woven network of carbon fibers which has not been subjected to graphitization treatment; and including a mixture of graphite particles and a hydrophobic polymer disposed within the above network, wherein the longest dimension of at least 90% of the above graphite particles is less than 100 $\mu$m, is proposed (see Patent Literature 4).

US2008/0268297 discloses a method of producing a porous electrode substrate for a PEM fuel cell involving the impregnation of a non-woven network of short PAN-based carbon fibers with carbon particles and fluorine-based resin followed by heat treating the impreganted non-woven network.

Citation List

Patent Literature

    Patent Literature 1: International Publication No. WO 2001/056103
    Patent Literature 2: International Publication No. WO 2002/042534
    Patent Literature 3: JP2007-273466A
    Patent Literature 4: JP2008-503043A

Summary of Invention

Technical Problem

However, although the porous carbon electrode substrate disclosed in Patent Literature 1 has high mechanical strength and surface smoothness, and sufficient gas permeability and electrical conductivity, a problem of the porous carbon electrode substrate is that the production process is complicated, and therefore, the production cost increases. The method for producing a carbon fiber sheet disclosed in Patent Literature 2 can achieve lower cost, but problems of the method are that shrinkage during the firing is large, and therefore, the thickness unevenness of the obtained porous electrode substrate is large, and the undulation of the sheet is large. The porous electrode substrate disclosed in Patent Literature 3 can achieve lower cost, but a problem of the porous electrode substrate is that there is a little tangling of the carbon fibers with the acrylic pulp in sheeting, and therefore, handling is difficult. In addition, the acrylic pulp has little polymer molecular orientation, compared with fibrous materials, and therefore, the carbonization rate during carbonization is low, and it is necessary to add much acrylic pulp in order to increase the handling properties. The porous electrode substrate disclosed in Patent Literature 4 is formed of short carbon fibers, carbon powder, and fluorine-based resin, and the carbonization step of firing at high temperature can be omitted, and therefore, lower cost can be achieved. But, a problem of the porous electrode substrate is that it is necessary to increase the amount of the carbon powder and the fluorine-based resin in order to increase electrical conductivity in the thickness direction, and therefore, it is difficult to achieve both electrical conductivity and gas diffusivity.

It is an object of the present invention to overcome the problems as described above and provide a porous electrode substrate that has high sheet strength, low production cost, and sufficient gas permeability and electrical conductivity, and a method for producing the same.

Solution to Problem

The present inventors have found that the above problems are solved by the following inventions 1) to 9).

1) A method for producing a porous electrode substrate, including a step (1) of producing a precursor sheet including short carbon fibers (A), and one or more types of" short precursor fibers (b) that undergo oxidation " and/or one or more types of" fibrillar precursor fibers (b') that undergo oxidation, " all of which are dispersed in a two-dimensional plane; a step (2) of subjecting the precursor sheet to entanglement treatment to form a three-dimensional entangled structure; a step (3) of impregnating the precursor sheet, in which the three-dimensional entangled structure is formed, with carbon powder and fluorine-based resin; and a step (4) of heat treating the precursor sheet at a temperature of 150°C or higher and lower than 400°C.
2) The method for producing a porous electrode substrate according to the above 1), further including a step (5) of hot press forming the precursor sheet at a temperature lower than 200°C after step (2) and before step (3).
3) The method for producing a porous electrode substrate according to the above 1) or 2), further including a step (6) of subjecting the precursor sheet to drying treatment at a temperature of 70°C or higher and lower than 150°C after step (3) and before step (4).
4) The method for producing a porous electrode substrate according to any of the above 1) to 3), wherein the carbon powder contains carbon black.
5) The method for producing a porous electrode substrate according to the above 4), wherein the carbon black is ketjen black.
6) The method for producing a porous electrode substrate according to any of the above 1) to 5), wherein the carbon powder contains a graphite powder.
7) A porous electrode substrate comprising a three-dimensional entangled structure, wherein short carbon fibers (A) dispersed in said three-dimensional structure are joined together via oxidized fibers (B), and wherein said short carbon fibers (A) and said oxidized fibers (B) are further joined together via carbon powder and fluorine-based resin.
8) A membrane electrode assembly using a porous electrode substrate according to the above 7).
9) A polymer electrolyte fuel cell using a membrane electrode assembly according to the above 8).

Advantageous Effects of invention

The present invention can provide a porous electrode substrate that has high sheet strength, low production cost, and sufficient gas permeability and electrical conductivity. In addition, based on the method for producing a porous electrode substrate according to the present invention, the above porous electrode substrate can be produced at low cost.

Brief Description of Drawing

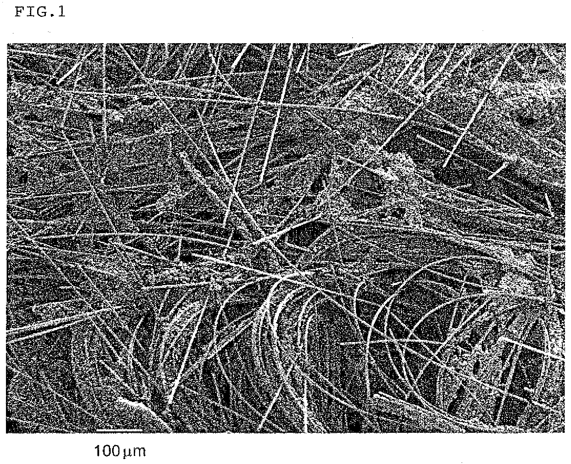

[Figure 1] Figure 1 is a scanning electron micrograph of a surface of the porous electrode substrate according to the present invention.

Description of Embodiments

« Porous Electrode Substrate »

The porous electrode substrate of the present invention includes a three-dimensional entangled structure including short carbon fibers (A) dispersed in a three-dimensional structure, joined together via oxidized fibers (B), the above short carbon fibers (A) and the above oxidized fibers (B) being further joined together via carbon powder and fluorine-based resin.
The porous electrode substrate can have the shape of a sheet, a spiral or the like. In case of the shape of a sheet, the basis weight of the porous electrode substrate is preferably about 15 to 100 $g/m^2$, the void ratio is preferably about 50 to 90%, the thickness is preferably about 50 to 300 $\mu$m, and the undulation is preferably 5 mm or less. The gas permeability of the porous electrode substrate is preferably 100 to 30000 $ml/hr/cm^2/mmAq$. In addition, the electrical resistance in the thickness direction (through-plane electric resistance) of the porous electrode substrate is preferably 50 $m\Omega.cm^2$ or less. Methods for measuring the gas permeability and through-plane electric resistance of the porous electrode substrate will be described later.

< Three-Dimensional Entangled Structure >

Three-dimensional entangled structure in the present invention is a structure in which short carbon fibers (A) constituting the structure are tangled with and joined together via oxidized fibers (B), and further joined via carbon powder and fluorine-based resin, as described later.

< Short Carbon Fibers (A) >

Short carbon fibers (A) constituting the porous electrode substrate are entangled in the thickness direction in the three-dimensional entangled structure. Examples of short carbon fibers (A) include those obtained by cutting carbon fibers, such as polyacrylonitrile-based carbon fibers (hereinafter referred to as "PAN-based carbon fibers"), pitch-based carbon fibers, and rayon-based carbon fibers, to a suitable length. Taking into consideration the mechanical strength of the porous electrode substrate, PAN-based carbon fibers are preferred.

The average fiber length of short carbon fibers (A) is preferably about 2 to 12 mm from the viewpoint of dispersibility. The average fiber diameter of short carbon fibers (A) is preferably 3 to 9 $\mu$m from the viewpoint of production costs and dispersibiiity of short carbon fibers, and is more preferably 4 to 8 $\mu$m from the viewpoint of the smoothness of the porous electrode substrate.

The content of short carbon fibers (A) in the porous electrode substrate is preferably 40 to 90% by mass with respect to the total of short carbon fibers (A) and oxidized fibers (B). In order to maintain sufficient mechanical strength of the porous electrode substrate and further provide sufficient through-plane electric resistance, the content of short carbon fibers (A) is more preferably 50 to 90% by mass with respect to the total of short carbon fibers (A) and oxidized fibers (B).

< Oxidized Fibers (B) >

Oxidized fibers (B) are fibers that join short carbon fibers (A) together, are present in a bent or curved state at joining portions, and may form a fiber structure or may form a three-dimensional mesh-like structure.

The content of oxidized fibers (B) in the porous electrode substrate is preferably 10 to 60% by mass with respect to the total of short carbon fibers (A) and oxidized fibers (B). In order to maintain sufficient mechanical strength of the porous electrode substrate and further provide sufficient through-plane electric resistance, the content of oxidized fibers (B) is more preferably 10 to 50% by mass with respect to the total of short carbon fibers (A) and oxidized fibers (B).

< Carbon Powder >

Carbon black or a mixture of carbon black and graphite powder is preferably used as carbon powder in order to enhance electrical conductivity and to maintain the sheet shape.

Carbon black is generally present as structures (agglomerates) in which primary particles having an average particle diameter of several tens of nanometers are joined together by melting to form structures, and further, the structures are joined together by van der Waals force. Carbon black has a significantly larger number of particles per unit mass than graphite powder, and at a certain critical concentration or more, the agglomerates are connected like a three-dimensional network to form macroscopic conductive paths. Therefore, carbon powder preferably contains at least carbon black. The proportion of carbon black included in carbon powder is more preferably in the range of 70 to 100% by mass, particularly preferably in the range of 80 to 90% by mass, with respect to the whole carbon powder. When the proportion of carbon black is 70% by mass or more, three-dimensional network-like conductive paths are easily formed.

On the other hand, the viscosity of a dispersion containing only carbon black as carbon powder tends to increase, and therefore, it is preferable to add graphite powder in order to decrease the viscosity of the dispersion, while maintaining the concentration of carbon powder. Graphite powder is composed of a highly crystalline graphite structure, and the average particle diameter of its primary particles is generally several micrometers to several hundred micrometers. The proportion of graphite powder included in carbon powder is preferably in the range of 10 to 20% by mass.

Furnace black, channel black, acetylene black, lamp black, thermal black, ketjen black, or the like can be used as the carbon black. Acetylene black or ketjen black having excellent electrical conductivity is more preferred, and ketjen black is particularly preferred. Pyrolytic graphite, spherical graphite, flake graphite, chunky graphite, earthy graphite, artificial graphite, expanded graphite, or the like can be used as the graphite powder. Pyrolytic graphite or spherical graphite having excellent electrical conductivity is preferred.

The content of carbon powder in the porous electrode substrate is preferably 10 to 100 parts by mass, more preferably 15 to 60 parts by mass, when the total of short carbon fibers (A) and oxidized fibers (B) is 100 parts by mass, from the viewpoint of exhibiting electrical conductivity.

< Fluorine-Based Resin >

Fluorine-based resin is not particularly limited, but homopolymers or copolymers of fluorine-based monomers, such as tetrafluoroethylene (TFE), hexafluoropropylene (HFP), vinylidene fluoride (VDF), chlorotrifluoroethylene (CTFE), vinyl fluoride, perfluoroalkyl vinyl ether, perfluoro(allyl vinyl ether), perfluoro(butenyl vinyl ether) (PBVE), and perfluoro(2,2-dimethyl-1,3-dioxole) (PDD), can be used. In addition, an ethylene-tetrafluoroethylene copolymer (ETFE), an ethylene-chlorotrifluoroethylene copolymer (ECTFE), and the like, which are copolymers of these fluorine-based monomers and olefins typified by ethylene, can also be used. These fluorine-based resins are preferably in a state of being dissolved in a solvent or being dispersed as a granular form in a dispersion medium, such as water or alcohol, because such a state can exhibit electric conductivity and binder performance when short carbon fibers (A) and oxidized fibers (B) are joined together. Examples of those that are easily available as commercial products in a solution, dispersion, or granular form include polytetrafluoroethylene (PTFE), a tetrafluoroethylene-hexafluoropropylene copolymer (FEP), tetrafluoroethylene-perfluoroalkyl vinyl ether (PFA), and polyvinylidene fluoride (PVDF). These are preferably used from the viewpoint of handling properties and production cost. These fluorine-based resins have water repellency.

The content of the fluorine-based resin in the porous electrode substrate is preferably 10 to 100 parts by mass, more preferably 10 to 40 parts by mass, when the total of short carbon fibers (A) and oxidized fibers (B) is 100 parts by mass, from the viewpoint of exhibiting electrical conductivity, and strength of the porous electrode substrate.

< Carbon Powder and Fluorine-Based Resin >

The mass ratio of carbon powder to fluorine-based resin is preferably 2:8 to 8:2, more preferably 4:6 to 7:3, from the viewpoint of exhibiting electrical conductivity and binder performance.

In addition, carbon powder and fluorine-based resin are preferably in a slurry form in order to enhance the performance of impregnation when they are impregnated within a three-dimensional entangled structure precursor sheet that includes short carbon fibers (A), and one or more types of" short precursor fibers (b) that undergo oxidation " and/or one or more types of" fibrillar precursor fibers (b') that undergo oxidation " described later. Water, an alcohol, or a mixture thereof is preferably used as the dispersion solvent from the viewpoint of handling properties and production cost. The concentration of carbon powder in the dispersion is preferably 4% by mass or more in order to form conductive paths composed of carbon powder, and is preferably 8% by mass or less, more preferably 6 to 8% by mass, in order to provide a dispersion having low viscosity and high impregnation properties. The concentration of fluorine-based resin in the dispersion is preferably 2% by mass or more in order to provide water repellency to the porous electrode substrate, and is preferably 6% by mass or less, more preferably 3 to 6% by mass, so as not to inhibit electrical conductivity.

When water is used as the dispersion solvent, a dispersant, such as a surfactant, can be used to disperse carbon powder and fluorine-based resin. The dispersant is not particularly limited, but polyethers, such as polyoxyethylene alkyl phenyl ether, aromatic sulfonates, such as naphthalene sulfonate, and the like can be used.

« Method for Producing Porous Electrode Substrate »

The porous electrode substrate of the present invention can be produced, for example, by the following methods.

A first production method is a method of sequentially performing step (1) of producing a precursor sheet including short carbon fibers (A), and one or more types of" short precursor fibers (b) that undergo oxidation " and/or one or more types of" fibrillar precursor fibers (b') that undergo oxidation," all of which are dispersed in a two-dimensional plane; step (2) of subjecting the above precursor sheet to entanglement treatment to form a three-dimensional entangled structure; step (3) of impregnating the precursor sheet, in which the above three-dimensional entangled structure is formed, with carbon powder and fluorine-based resin; and step (4) of heat treating the above precursor sheet at a temperature of 150°C or higher and lower than 400°C.

A second production method is a method of further performing step (5) of hot press forming the above precursor sheet at a temperature lower than 200°C after step (2) and before step (3) in the first production method. A third production method is a method of further performing step (6) of subjecting the above precursor sheet to drying treatment at a temperature of 70°C or higher and lower than 150°C after step (3) and before step (4) in the first production method or the second production method.

< Short Precursor Fibers (b) That Undergo Oxidation >

Short precursor fibers (b) that undergo oxidation are those obtained by cutting long precursor fibers that undergo oxidation to a suitable length. The fiber length of short precursor fibers (b) that undergo oxidation is preferably about 2 to 20 mm from the viewpoint of dispersibility. The cross-sectional shape of short precursor fibers (b) that undergo oxidation is not particularly limited, but those having high roundness are preferred from the viewpoint of mechanical strength after carbonization and production cost. In addition, the diameter of short precursor fibers (b) that undergo oxidation is further preferably 5 $\mu$m or less in order to suppress breakage due to shrinkage during heat treatment at a temperature of 150°C or higher and lower than 400°C.

For polymers used as short precursor fibers (b) that undergo oxidation, the residual mass after heat treating step (4) is preferably 20% by mass or more. Examples of polymers in which the residual mass after heat treating step (4) is 20% by mass or more include acrylic polymers, cellulosic polymers, and phenolic polymers.

Acrylic polymers used as short precursor fibers (b) that undergo oxidation may be homopolymers of acrylonitrile, or copolymers of acrylonitrile and other monomers. Monomers that are copolymerized with acrylonitrile are not particularly limited as long as they are unsaturated monomers constituting general acrylic fibers. Examples of monomers include acrylates typified by methyl acrylate, ethyl acrylate, isopropyl acrylate, n-butyl acrylate, 2-ethylhexyl acrylate, 2-hydroxyethyl acrylate, hydroxypropyl acrylate, and the like; methacrylates typified by methyl methacrylate, ethyl methacrylate, isopropyl methacrylate, n-butyl methacrylate, isobutyl methacrylate, t-butyl methacrylate, n-hexyl methacrylate, cyclohexyl methacrylate, lauryl methacrylate, 2-hydroxyethyl methacrylate, hydroxypropyl methacrylate, diethylaminoethyl methacrylate, and the like; acrylic acid, methacrylic acid, maleic acid, itaconic acid, acrylamide, N-methylolacrylamide, diacetoneacrylamide, styrene, vinyltoluene, vinyl acetate, vinyl chloride, vinylidene chloride, vinylidene bromide, vinyl fluoride, and vinylidene fluoride. Taking into consideration spinnability; short carbon fibers (A) that can be joined together at low temperature to high temperature; the residual mass that is large during heat treatment; and fiber elasticity and fiber strength in performing entanglement treatment that will be described later, acrylic polymers containing 50% by mass or more of acrylonitrile units are preferably used.

The weight-average molecular weight of acrylonitrile polymers used as short precursor fibers (b) that undergo oxidation is not particularly limited, but is preferably 50000 to 1000000. When the weight-average molecular weight is 50000 or more, there is a tendency for the spinnability to improve, and at the same time, the yarn quality of the fibers is good. When the weight-average molecular weight is 1000000 or less, there is a tendency for the polymer concentration, that provides optimum viscosity of the dope, to increase, and productivity is improved.

One type of short precursor fiber (b) that undergoes oxidation may be used, or two or more types of short precursor fibers (b) that undergo oxidation that have different fiber diameters or that are made of different polymer types may be used. Depending on the type(s) of these short precursor fibers (b) that undergo oxidation and fibrillar precursor fibers (b') that undergo oxidation described later, and depending on the mixing ratio of these short precursor fibers (b) that undergo oxidation and fibrillar precursor fibers (b') that undergo oxidation to short carbon fibers (A), the proportion of short precursor fibers (b) that undergo oxidation and fibrillar precursor fibers (b') that undergo oxidation in which both short and fibrillar precursor fibers remain as oxidized fibers (B) in the finally obtained porous electrode substrate is different. Therefore, the mixing amount should be appropriately adjusted to achieve the target content of oxidized fibers (B).

< Fibrillar Precursor Fibers (b') That Undergo Oxidation >

The following precursor fibers can be used as the fibrillar precursor fibers that undergo oxidation: precursor fibers that have a structure in which a large number of fibrils that have a diameter of several $\mu$m or less (for example, 0.1 to 3 $\mu$m) branch from a fibrous stem, and, short precursor fibers to be fibrillated by beating. By using these fibrillar precursor fibers that undergo oxidation, short carbon fibers (A) are skillfully tangled with fibrillar precursor fibers (b') that undergo oxidation in the precursor sheet, and it is easy to obtain a precursor sheet having excellent mechanical strength. The freeness of fibrillar precursor fibers (b') that undergo oxidation is not particularly limited. Generally, when fibrillar fibers having high freeness are used, the mechanical strength of the precursor sheet is improved, but the gas permeability of the porous electrode substrate decreases.

The following precursor fibers can be used as the fibrillar precursor fibers (b') that undergo oxidation: one type or two or more types of precursor fibers that have a structure in which a large number of fibrils branch and that have different freeness or fiber diameters or that are made of different polymer types, one type or two or more types of precursor fibers to be fibrillated by beating, and a combination thereof.

< Precursor Fibers That Undergo Oxidation Having Structure in Which Large Number of Fibrils Branch >

For a polymer used as precursor fibers that undergo oxidation that have a structure in which a large number of fibrils branch, the residual mass after heat treating step (4) is preferably 20% by mass or more. Examples of polymers in which the residual mass after heat treating step (4) is 20% by mass or more can include acrylic polymers, cellulosic polymers, and phenolic polymers.

Acrylic polymers used for the precursor fibers that undergo oxidation that have a structure in which a large number of fibrils branch may be homopolymers of acrylonitrile, or copolymers of acrylonitrile and other monomers. Monomers that are copolymerized with acrylonitrile are not particularly limited as long as they are unsaturated monomers constituting general acrylic fibers. Examples of monomers include acrylates typified by methyl acrylate, ethyl acrylate, isopropyl acrylate, n-butyl acrylate, 2-ethylhexyl acrylate, 2-hydroxyethyl acrylate, hydroxypropyl acrylate, and the like; methacrylates typified by methyl methacrylate, ethyl methacrylate, isopropyl methacrylate, n-butyl methacrylate, isobutyl methacrylate, t-butyl methacrylate, n-hexyl methacrylate, cyclohexyl methacrylate, lauryl methacrylate, 2-hydroxyethyl methacrylate, hydroxypropyl methacrylates, diethylaminoethyl methacrylate, and the like; acrylic acid, methacrylic acid, maleic acid, itaconic acid, acrylamide, N-methylolacrylamide, diacetoneacrylamide, styrene, vinyltoluene, vinyl acetate, vinyl chloride, vinylidene chloride, vinylidene bromide, vinyl fluoride, and vinylidene fluoride. Taking into consideration spinnability, short carbon fibers (A) can be joined together at low temperature to high temperature, the residual mass that is large during heat treatment is large, and further, taking into consideration entanglement with short carbon fibers (A) and sheet strength, acrylic polymers containing 50% by mass or more of acrylonitrile units are preferably used.

The method for producing precursor fibers that undergo oxidation that have a structure in which a large number of fibrils branch is not particularly limited, but it is preferable to use a jet solidification method in which the control of freeness is easy.

< Short Precursor Fibers That Undergo Oxidation to Be Fibrillated by Beating >

Short precursor fibers that undergo oxidation to be fibrillated by beating are long, splittable sea-island composite fibers that are cut to a suitable length, and are beaten by a refiner, a pulper, or the like, and fibrillated. The short precursor fibers that undergo oxidation to be fibrillated by beating are produced using two or more types of different polymers that are dissolved in a common solvent and are incompatible. The residual mass of at least one type of the above different polymers after heat treating step (4) is preferably 20% by mass or more.

Examples of polymers in which the residual mass after heat treating step (4) is 20% by mass or more, among polymers used for the splittable sea-island composite fibers, include acrylic polymers, cellulosic polymers, and phenolic polymers.

Acrylic polymers used for the splittable sea-island composite fibers may be homopolymers of acrylonitrile, or copolymers of acrylonitrile and other monomers. Monomers that are copolymerized with acrylonitrile are not particularly limited as long as they are unsaturated monomers constituting general acrylic fibers. Examples of monomers include acrylates typified by methyl acrylate, ethyl acrylate, isopropyl acrylate, n-butyl acrylate, 2-ethylhexyl acrylate, 2-hydroxyethyl acrylate, hydroxypropyl acrylate, and the like; methacrylates typified by methyl methacrylate, ethyl methacrylate, isopropyl methacrylate, n-butyl methacrylate, isobutyl methacrylate, t-butyl methacrylate, n-hexyl methacrylate, cyclohexyl methacrylate, lauryl methacrylate, 2-hydroxyethyl methacrylate, hydroxypropyl methacrylate, diethylaminoethyl methacrylate, and the like; acrylic acid, methacrylic acid, maleic acid, itaconic acid, acrylamide, N-methylolacrylamide, diacetoneacrylamide, styrene, vinyltoluene, vinyl acetate, vinyl chloride, vinylidene chloride, vinylidene bromide, vinyl fluoride, and vinylidene fluoride. Among them, acrylic polymers containing 50% by mass or more of acrylonitrile units are preferably used from the viewpoint of spinnability, and the residual mass during heat treatment step.

The weight-average molecular weight of acrylonitrile polymers used for the splittable sea-island composite fibers is not particularly limited, but is preferably 50000 to 1000000. When the weight-average molecular weight is 50000 or more, there is a tendency for the spinnability to improve, and at the same time, the yarn quality of the fibers is good. When the weight-average molecular weight is 1000000 or less, there is a tendency for the polymer that provides optimum viscosity of the dope, to increase, and productivity is improved.

When the above described acrylonitrile-based polymers are used as the polymer in which the residual mass after heat treating step (4) is 20% by mass or more, among polymers used for the splittable sea-island composite fibers, the polymer other than the acrylonitrile-based polymers needs to be dissolved in a solvent common to the acrylonitrile-based polymer and to be stably present in dope. In other words, in the dope, when the degree of incompatibility of two polymers is large, the fibers are heterogeneous, and yarn breakage during spinning is caused, and therefore, the forming of fibers may be impossible. Therefore, the other polymer needs miscibility such that it is incompatible with an acrylonitrile-based polymer when it is dissolved in a solvent common to the acrylonitrile-based polymer, but a sea-island structure can be formed when spinning is carried out. In addition, in the case of wet spinning, when the other polymer is dissolved in water in a solidification tank or in a washing tank, failing off occurs, which causes problems during production, and therefore, the other polymer needs to be poorly soluble in water.

Examples of the other polymer that satisfies these requirements include polyvinyl chloride, polyvinylidene chloride, polyvinylidene fluoride, polyvinylpyrrolidone, cellulose acetate, acrylic resins, methacrylic resins, and phenolic resins. Cellulose acetate, acrylic resins, and methacrylic resins can be preferably used from the viewpoint of the balance of the above-described requirements. One, two or more polymers may be used as the other polymer.

The splittable sea-island composite fibers used as the short precursor fibers that undergo oxidation to be fibrillated by beating can be produced by a usual wet spinning method. When an acrylonitrile polymer is used as the polymer in which the residual mass after carbonization treatment step is 20% by mass or more, the acrylonitrile polymer is mixed with the other polymer, and then, the mixture is dissolved in a solvent to provide dope for splittable sea-island composite fibers. Alternatively, dope obtained by dissolving an acrylonitrile polymer in a solvent, and dope obtained by dissolving the other polymer in a solvent may be mixed by a static mixer or the like to provide dope for splittable sea-island composite fibers. An organic solvent, such as dimethylamide, dimethylformamide, or dimethyl sulfoxide, can be used as the solvent. The splittable sea-island composite fibers can be obtained by spinning these dopes from nozzles, and subjecting the yarns to wet hot drawing, washing, drying, and dry hot drawing.

The cross-sectional shape of the short precursor fibers that undergo oxidation to be fibrillated by beating is not particularly limited. In order to suppress dispersibility, and breakage due to shrinkage during heat treatment, the fineness of the short precursor fibers that undergo oxidation to be fibrillated by beating is preferably 1 to 10 dtex.

The average fiber length of the short precursor fibers that undergo oxidation to be fibrillated by beating is preferably 1 to 20 mm from the viewpoint of dispersibility.

The short precursor fibers that undergo oxidation to be fibrillated by beating are beaten by mechanical external force due to the debonding of phase separation interfaces, and at least portions of them are split and fibrillated. The beating method is not particularly limited. Examples of the beating method include a method of fibrillating the short precursor fibers that undergo oxidation by a refiner, a pulper, a beater, or the jet of a pressurized water flow (water jet punching).

The state of fibrillation changes, depending on the beating method and the duration of beating when the short precursor fibers that undergo oxidation to be fibrillated by beating are beaten by mechanical external force due to the debonding of phase separation interfaces. As a method for evaluating the degree of fibrillation, freeness evaluation (JIS P8121 (Pulp Freeness Test Method: Canadian standard type)) can be used. The freeness of the short precursor fibers that undergo oxidation to be fibrillated by beating is not particularly limited. As the freeness decreases, there is a tendency fort oxidized fibers (B) to form three-dimensional mesh-like structures. When sufficient beating is not performed, and when the short precursor fibers that undergo oxidation that still have high freeness and that are to be fibrillated by beating, are used, there is a tendency for oxidized fibers (B) to form fiber structures.

< Precursor Sheet Producing Step (1) >

In producing the precursor sheet, paper making methods, such as a wet method in which short carbon fibers (A), and one or more types of short precursor fibers (b) that undergo oxidation and/or one or more types of fibrillar precursor fibers (b') that undergo oxidation are dispersed in a liquid medium to form paper; and a dry method in which short carbon fibers (A), and one or more types of short precursor fibers (b) that undergo oxidation and/or one or more types of fibrillar precursor fibers(b') that undergo oxidation are dispersed in air and allowed to fall and accumulate, can be applied, but the wet method is preferred. It is preferable to perform wet paper making, using one or more types of fibrillar precursor fibers (b') that undergo oxidation so as to facilitate the opening of short carbon fibers (A) into single fibers, to prevent the opened single fibers from reconverging, and further to tangle short carbon fibers (A) with one or more types of short precursor fibers (b) that undergo oxidation, in order to improve sheet strength and to ensure that the sheet is substantially binder free.

Examples of mediums in which short carbon fibers (A), and one or more types of short precursor fibers (b) that undergo oxidation and/or one or more types of fibrillar precursor fibers (b') that undergo oxidation are dispersed include mediums in which one or more types of short precursor fibers (b) that undergo oxidation and/or one or more types of fibrillar precursor fibers (b') that undergo oxidation are not dissolved, such as water and alcohols. From the viewpoint of productivity, water is preferred.

The precursor sheet can be produced either by a continuous method or a batch method. From the viewpoint of productivity and mechanical strength of the precursor sheet, it is preferable to produce the precursor sheet by the continuous method. The basis weight of the precursor sheet is preferably about 10 to 200 g/m$^2$. In addition, the thickness of the precursor sheet is preferably about 20 to 400 $\mu$m.

< Entanglement Treatment Step (2) >

Entanglement treatment in which short carbon fibers (A) in the precursor sheet are entangled with one or more types of short precursor fibers (b) that undergo oxidation and/or one or more types of fibrillar precursor fibers (b') that undergo oxidation in the precursor sheet is not particularly limited as long as it is a method in which a three-dimensional entangled structure is formed. The entanglement treatment can be performed by a mechanical entanglement method, such as a needle punching method, a high-pressure liquid jet method, such as a water jet punching method, a high-pressure gas jet method, such as a steam jet punching method, or a method of a combination thereof. The high-pressure liquid jet method is preferred because the breakage of short carbon fibers (A) in entanglement treatment step can be suppressed, and sufficient entanglement properties are obtained.

The high-pressure liquid jet treatment is a treatment in which short carbon fibers (A) are entangled with one or more types of short precursor fibers (b) that undergo oxidation and/or one or more types of fibrillar precursor fibers (b') that undergo oxidation in the precursor sheet by placing the precursor sheet on a support member having a substantially smooth surface, and allowing a columnar liquid flow, a fan-shaped liquid flow, a slit liquid flow, or the like jetted at a pressure of 1 MPa or more to act on the precursor sheet. Here, for the support member that has a substantially smooth surface, any member can be used as long as the pattern on the support member is not formed on the obtained three-dimensional entangled structure, and the jetted liquid is quickly removed. Specific examples thereof can include a 30 to 200 mesh wire net or plastic net or a roll.

The three-dimensional entangled structure precursor sheet can be continuously produced by sheeting the precursor sheet that includes short carbon fibers (A), and one or more types of short precursor fibers (b) that undergo oxidation and/or one or more types of fibrillar precursor fibers (b') that undergo oxidation, and then by performing the entanglement treatment of short carbon fibers (A) with one or more types of short precursor fibers (b) that undergo oxidation and/or one or more types of fibrillar precursor fibers (b') that undergo oxidation in the precursor sheet by high-pressure liquid jet treatment or the like, on the support member having a substantially smooth surface, which is preferable from the viewpoint of productivity.

The liquid used for the high-pressure liquid jet treatment is not particularly limited as long as it is a solvent that does not dissolve the treated fibers. Usually, water is preferably used. Water may be warm water. The hole diameter of each jet nozzle in the high-pressure liquid jet nozzles is preferably 0.06 to 1.0 mm, more preferably 0.1 to 0.3 mm, in the case of a columnar flow. The distance between the nozzle jet holes and the laminate is preferably in the range of about 0.5 to 5 cm. The pressure of the liquid is 1 MPa or more, preferably 1.5 MPa or more. The entanglement treatment may be performed in one row or a plurality of rows. When the entanglement treatment is performed in a plurality of rows, the technique that is effective is to make the pressure in the high-pressure liquid jet treatment higher in the second and subsequent rows than in the first row.

The entanglement treatment of the precursor sheet by high-pressure liquid jet may be repeated a plurality of times. In other words, after the high-pressure liquid jet treatment of the precursor sheet is performed, it is possible to further laminate the precursor sheet and perform the high-pressure liquid jet treatment, or it is possible to turn over the three-dimensional entangled structure precursor sheet being made, and perform the high-pressure liquid jet treatment from the opposite side. In addition, these operations may be repeated.

When the three-dimensional entangled structure precursor sheet is continuously produced, a striped track pattern derived from the formation of the rough and fine structure of the sheet, in the sheeting direction, can be suppressed by vibrating a high-pressure liquid jet nozzle, which is provided with nozzle holes in one row or a plurality of rows, in the width direction of the sheet. Mechanical strength in the sheet width direction can be exhibited by suppressing the striped track pattern in the sheeting direction. In addition, when a plurality of high-pressure liquid jet nozzles provided with nozzle holes in one row are used or when a plurality of rows are used, a periodic pattern that appears in the three-dimensional entangled structure precursor sheet can also be suppressed by controlling the number of vibrations and the vibration phase difference of the high-pressure liquid jet nozzles in the width direction of the sheet.

< Impregnation Step (3) >

The method for impregnation with carbon powder and fluorine-based resin is not particularly limited as long as it is a method that can provide carbon powder and fluorine-based resin to the three-dimensional entangled structure precursor sheet. A method of uniformly coating a three-dimensional entangled structure precursor sheet surface with carbon powder and fluorine-based resin, using a coater, a dip-nip method using a squeezing apparatus, and the like can be used.

The number of times of impregnation is not particularly limited, but it is preferable to decrease the number of times of impregnation, from the viewpoint of reducing production cost. When the number of times of impregnation is plural, the same slurry may be used, or slurries having different slurry concentrations, and different types and mixing ratios of the carbon powder and the fluorine-based resin may be used for impregnation a precursor sheet with a slurry of carbon powder and fluorine-based resin.

In addition, the amount of carbon powder and fluorine-based resin that is used for impregnation in the thickness direction of the three-dimensional entangled structure precursor sheet may be uniform or may have a concentration gradient.

< Heat Treatment Step (4) >

In order to properly join short carbon fibers (A) by melting one or more types of short precursor fibers (b) that undergo oxidation and/or one or more types of fibrillar precursor fibers (b') that undergo oxidation, and in order to properly join short carbon fibers (A) and oxidized fibers (B) together by sintering the fluorine-based resin as a binder component, the precursor sheet impregnated with carbon powder and fluorine-based resin is heat treated at a temperature of 150°C or higher and lower than 400°C. The temperature of heat treatment is preferably 200°C or higher in order to soften and melt the fluorine-based resin, and is preferably lower than 400°C, more preferably 300 to 370°C, in order to suppress pyrolysis of the fluorine-based resin.

The method of heat treatment is not particularly limited, but a method of heat treating that uses a high-temperature atmosphere furnace or a far infrared heating furnace, a method of direct heating treatment that uses a hot plate, a hot roll, or the like can be applied. The duration of heat treatment can be, for example, 1 minute to 2 hours.

When a continuously produced three-dimensional entangled structure precursor sheet is heat treated, it is preferable to continuously perform heat treatment over the entire length of the precursor sheet, from the viewpoint of reducing production cost. When the porous electrode substrate is long, the productivity of the porous electrode substrate increases, and subsequent MEA production can also be continuously performed, and therefore, the production cost of the fuel cell can be reduced. In addition, from the viewpoint of improving productivity and reducing production cost of the porous electrode substrate and the fuel cell, it is preferable to continuously roll up the produced porous electrode substrate.

< Hot Press Forming Step (5) >

As regards joining short carbon fibers (A) by melting one or more types of short precursor fibers (b) that undergo oxidation and/or one or more types of fibrillar precursor fibers (b') that undergo oxidation, reducing the uneven thickness of the porous electrode substrate, further, preventing fluffing, near the sheet surface, from among short carbon fibers (A) and from among one or more types of short precursor fibers (b) that undergo oxidation and/or one or more types of fibrillar precursor fibers (b') that undergo oxidation and that are in a state of being fluffed on the sheet surface due to entanglement treatment, and preventing short circuit current and gas leakage in a fuel cell, it is preferable to form the precursor sheet by hot press forming at a temperature lower than 200°C before impregnation treatment with carbon powder and fluorine-based resin.

For the method of the hot press forming, any technique can be applied as long as it is a technique that can form the precursor sheet evenly by hot press forming. Examples of the technique include a method of hot pressing the precursor sheet, with a smooth rigid plate placed on both surfaces of the precursor sheet, and a method using a hot roll press apparatus or a continuous belt press apparatus. When a continuously produced precursor sheet is hot press formed, the method using a hot roll press apparatus or a continuous belt press apparatus is preferred. By this method, heat treatment can be continuously performed.

The heating temperature in hot press forming is preferably lower than 200°C, more preferably 120 to 190°C, in order to effectively make the surface of the precursor sheet smooth. The duration of hot press forming can be, for example, 30 seconds to 10 minutes.

The forming pressure is not particularly limited. When the content ratio of one or more types of short precursor fibers (b) that undergo oxidation and/or one or more types of fibrillar precursor fibers (b') that undergo oxidation in the precursor sheet is high, the surface of the precursor sheet can be easily made smooth even if the forming pressure is low. At this time, if the forming pressure is higher than necessary, the problem of short carbon fibers (A) being broken during hot press forming, the problem of the structure of the porous electrode substrate being too dense, and the like may occur. The forming pressure is preferably about 20 kPa to 10 MPa.

When the precursor sheet, that is sandwiched between two rigid plates, is formed by hot press forming or when the precursor sheet is formed by using a hot roll press apparatus or a continuous belt press apparatus, it is preferable to previously apply a release agent to the rigid plates, the hot roll or the belt, or to sandwich mold release papers between the precursor sheet and the rigid plates, the hot roll or the belt, so that one or more types of short precursor fibers (b) that undergo oxidation and/or one or more types of fibrillar precursor fibers (b') that undergo oxidation, and the like do not adhere to the rigid plates, the roll or the belt.

< Drying Treatment Step (6) >

In order to remove the dispersion solvent from the precursor sheet impregnated with carbon powder and fluorine-based resin, it is preferable to subject the precursor sheet impregnated with carbon powder and fluorine-based resin to drying treatment at a temperature of 70°C or higher and lower than 150°C. The duration of drying treatment can be, for example, 1 minute to 1 hour.

The method of drying treatment is not particularly limited, but heat treatment using a high-temperature atmosphere furnace or a far infrared heating furnace, direct heating treatment using a hot plate, a hot roll, and the like can be applied. As regards being able to prevent the adhesion of the carbon powder and the fluorine-based resin to the heating source, drying treatment using a high-temperature atmosphere furnace is preferred. When a continuously produced three-dimensional entangled structure precursor sheet is subjected to drying treatment, it is preferable to continuously perform drying treatment over the entire length of the precursor sheet, from the viewpoint of reducing production cost. By this, heat treatment can be continuously performed.

« Membrane Electrode Assembly (MEA) and Polymer Electrolyte Fuel Cell »

The porous electrode substrate of the present invention can be suitably used for a membrane electrode assembly. In addition, a membrane electrode assembly using the porous electrode substrate of the present invention can be suitably used for a polymer electrolyte fuel cell.

Examples

The present invention will be more specifically described below by Examples. Physical property values and the like in Examples were measured by the following methods. "Parts" means "parts by mass."

(1) Gas Permeability

According to JIS P-8117, the time taken for 200 mL of air to pass through a porous electrode substrate was measured using a Gurley densometer, and the gas permeability ($mL/hr/cm^2/mmAq$) was calculated.

(2) Thickness

The thickness of a porous electrode substrate was measured using a thickness measuring apparatus, Dial Thickness Ggauge (trade name: 7321, manufactured by Mitutoyo Corporation). The size of the gauge head was 10 mm in diameter, and the measurement pressure was set at 1.5 kPa.

(3) Through-Plane Electric Resistance

A porous electrode substrate was sandwiched between gold-plated copper plates and pressurized from above and below the copper plates at 0.6 MPa, and the resistance value when current was allowed to flow at a current density of 10 $mA/cm^2$ was measured. The electric resistance in the thickness direction (through-plane electric resistance) of the porous electrode substrate was obtained from the following formula:

$$[ \text{Through-plane electric resistance } (m\Omega \cdot cm^2) ] = [ \text{the measured resistance value } (m\Omega) ] \times [ \text{sample area } (cm^2) ]$$

(4) Average Diameter of Oxidized Fibers (B)

For the average diameter of oxidized fibers (B), the diameters of oxidized fibers (B) at any 50 positions were measured from a scanning electron micrograph of a surface of the porous electrode substrate, and their average value was calculated.

(5) Content of Oxidized Fibers (B)

The content of oxidized fibers (B) was calculated from the basis weight of a porous electrode substrate fabricated without impregnation with carbon powder and fluorine-based resin, and from the basis weight of short carbon fibers (A) that were used, by the following formula:

$$[ \text{The content } (\%) \text{ of the oxidized fibers (B)} ] = [ (W2 - W1) / W2 ] \times 100$$

In the above formula, W2 is the basis weight ($g/m^2$) of a porous electrode substrate fabricated without impregnation with carbon powder and fluorine-based resin, and W1 is the basis weight ($g/m^2$) of short carbon fibers (A).

(6) Undulation of Porous Electrode Substrate

The undulation of a porous electrode substrate was calculated from the difference between the maximum value and the minimum value of the height of a porous electrode substrate having a length of 250 mm and a width of 250 mm, when the porous electrode substrate was left at rest on a flat plate.

(Example 1)

PAN-based carbon fibers having an average fiber diameter of 7 $\mu$m and an average fiber length of 3 mm were prepared as short carbon fibers (A). In addition, short acrylic fibers having an average fiber diameter of 4 μm and an average fiber length of 3 mm (trade name: D122, manufactured by Mitsubishi Rayon Co., Ltd.) were prepared as short precursor fibers (b) that undergo oxidation. In addition, splittable acrylic sea-island composite short fibers (b$_2$') composed of an acrylic polymer and a diacetate (cellulose acetate) that are to be fibrillated by beating (manufactured by Mitsubishi Rayon Co., Ltd., trade name: VONNEL M.V.P.-C651, average fiber length: 3 mm) were prepared as fibrillar precursor fibers (b') that undergo oxidation.

The production of a precursor sheet, and a three-dimensional entangled structure precursor sheet by entanglement treatment were performed by a wet continuous paper making method, and an entanglement treatment method using continuous pressurized water flow jet treatment as described below.

[Wet Continuous Paper Making Method]

(1) Defibration of Short Carbon Fibers (A)

PAN-based carbon fibers that have an average fiber diameter of 7 μm and an average fiber length of 3 mm were dispersed in water so that the fiber concentration was 1% (10 g/L), and were subjected to defibration treatment through a disk refiner (manufactured by Kumagai Riki Kogyo Co., Ltd.) to provide defibrated slurry fibers (SA).

(2) Defibration of Short Precursor Fibers (b) That Undergo Oxidation

Short acrylic fibers that have an average fiber diameter of 4 μm and an average fiber length of 3 mm (trade name: D122, manufactured by Mitsubishi Rayon Co., Ltd.), as short precursor fibers (b) that undergo oxidation, were dispersed in water, so that the fiber concentration was 1% (10 g/L), to provide defibrated slurry fibers (Sb).

(3) Defibration of Fibrillar Precursor Fibers (b') That Undergo Oxidation

Splittable acrylic sea-island composite short fibers composed of an acrylic polymer and a diacetate (cellulose acetate) that are to be fibrillated by beating (manufactured by Mitsubishi Rayon Co., Ltd., trade name: VONNEL M.V.P.-C651, average fiber length: 3 mm), as fibrillar precursor fibers (b') that undergo oxidation, were dispersed in water, so that the fiber concentration was 1% (10 g/L), to provide defibrated slurry fibers (Sb').

(4) Preparation of Paper-Making Slurry

Defibrated slurry fibers (SA), defibrated slurry fibers (Sb), defibrated slurry fibers (Sb'), and water for dilution were measured so that the mass ratio of short carbon fibers (A), short precursor fibers (b) that undergo oxidation, and fibrillar precursor fibers (b') that undergo oxidation was 50:30:20 and the concentration of the fibers in a slurry (hereinafter abbreviated as flocks) was 1.44 g/L, and they were charged into a slurry feed tank. Further, polyacrylamide was added to prepare a paper-making slurry having a viscosity of 22 centipoises.

(5) Production of Precursor Sheet, and Three-Dimensional Entanglement Treatment by Pressurized Water Flow Jet

[Entanglement Treatment Apparatus]

Entanglement treatment apparatus having the following configuration was used. The above apparatus includes a sheet-shaped material conveying portion including a net driving portion and a net in which plain-woven mesh made of a plastic net having a width of 60 cm and a length of 585 cm was connected in a belt shape and was capable of being continuously rotated, a paper-making slurry feed portion (the opening width of the slurry feed portion was 48 cm, and the fed slurry amount was 30 L/min), a reduced-pressure dewatering portion located under the net, and a pressurized water flow jet treatment portion. The pressurized water flow jet treatment portion was composed of two types of water jet nozzles, and three of the following two types of nozzles were used as the water jet nozzles.

- nozzle 1:

    hole diameter φ: 0.10 mm × 501 Holes, width direction hole pitch: 1 mm (1001 holes/a width of 1 m), one row arrangement, effective nozzle width: 500 mm

- nozzle 2:

hole diameter φ: 0.10 mm × 501 Holes, width direction hole pitch: 1 mm (1001 holes/a width of 1 m), one row arrangement, effective nozzle width: 500 mm

- nozzle 3:

  hole diameter φ: 0.15 mm × 1002 Holes, width direction hole pitch: 1.5 mm, three row arrangement, row pitch: 5 mm, effective nozzle width: 500 mm

[Entanglement Treatment Method]

The above paper-making slurry was fed onto a net of the apparatus by a metering pump. The paper-making slurry was widened to a predetermined size through a flow box for adjusting the slurry into a uniform flow, and fed. Then, the slurry was left at rest, passed through a natural dewatering portion, and completely dewatered by the reduced-pressure dewatering apparatus, and a wet paper web having a target basis weight of 50 g/m$^2$ was loaded on a net. Simultaneously with the completion of this treatment, the wet paper web was passed through the apparatus in the order of a pressurized water flow jet pressure of 1 MPa (the nozzle 1), a pressure of 2 MPa (the nozzle 2), and a pressure of 1 MPa (the nozzle 3) to be subjected to entanglement treatment by the water jet nozzles at the back of the apparatus.

The sheet-shaped material after entanglement treatment was dried at 150°C for 3 minutes by a pin tenter tester (trade name: PT-2A-400 manufactured by Tsujii Dyeing Machine Manufacturing Co., Ltd.) to obtain a three-dimensional entangled structure precursor sheet having a basis weight of 48 g/m$^2$. The dispersed state of short precursor fibers (b) that undergo oxidation and fibrillar precursor fibers (b') that undergo oxidation in the obtained three-dimensional entangled structure precursor sheet was good.

(6) Hot Press Forming

Both surfaces of this three-dimensional entangled structure precursor sheet were sandwiched between papers coated with a silicone-based mold release agent, and then, the precursor sheet was subjected to hot press forming by using a batch press apparatus under conditions of 180°C and 3 MPa for 3 minutes.

(7) Impregnation and Drying Treatment

Next, ketjen black (manufactured by Lion Corporation) as carbon powder, a polytetrafluoroethylene particle dispersion (trade name: PTFE Dispersion 31-JR, manufactured by Du Pont-Mitsui Fluorochemicals Co., Ltd.) as fluorine-based resin, and also polyoxyethylene octyl phenyl ether as a dispersant were prepared.

A mixture of carbon powder and fluorine-based resin was prepared as follows, and impregnation was performed.

An aqueous dispersion prepared so that the carbon powder, the fluorine-based resin, and the dispersant were 4.0% by mass, 3.0% by mass, and 4.5% by mass, respectively, was stirred by a homogenizer for 1 hour to prepare a dispersion of a mixture of carbon powder and fluorine-based resin.

The three-dimensional entangled structure precursor sheet after hot press forming was immersed in this dispersion aqueous solution, and then, the excess dispersion aqueous solution was removed by a nip apparatus. Then, the three-dimensional entangled structure precursor sheet impregnated with the mixture of carbon powder and fluorine-based resin was dried by a batch dryer at 100°C for 20 minutes.

(8) Heat Treatment

Then, the precursor sheet was heat treated in a batch atmosphere furnace in the air under conditions of 360°C for 1 hour to obtain a porous electrode substrate.

The obtained porous electrode substrate had no in-plane shrinkage during heat treatment, and had a sheet undulation as small as 2 mm or less, and good gas permeability, good thickness, and good through-plane electric resistance. In addition, the content of oxidized fibers (B) was 48% by mass. As shown in Figure 1, a scanning electron micrograph of a surface of the obtained porous electrode substrate,proved that short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 2)

A porous electrode substrate was obtained in the same manner as in Example 1, except that the dispersion of the mixture of carbon powder and fluorine-based resin was prepared so that the carbon powder, the fluorine-based resin, and the dispersant were 4.0% by mass, 4.0% by mass, and 4.5% by mass, respectively. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 3)

A porous electrode substrate was obtained in the same manner as in Example 1, except that the dispersion of the mixture of carbon powder and fluorine-based resin was prepared so that the carbon powder, the fluorine-based resin, and the dispersant were 4.0% by mass, 2.0% by mass, and 4.5% by mass, respectively. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 4)

A porous electrode substrate was obtained in the same manner as in Example 1, except that the number of times of impregnation with the dispersion of the mixture of carbon powder and fluorine-based resin was two. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 5)

A porous electrode substrate was obtained in the same manner as in Example 1, except that the number of times of impregnation with the dispersion of the mixture of carbon powder and fluorine-based resin was three. The obtained porous electrode substrate had no in-plane shrinkage during heat treatment, and although the gas permeability decreased, compared with Example 1, the porous electrode substrate had good thickness and good through-plane electric resistance. In the obtained porous electrode substrate, short carbon fibers (A) were in a state of being dispersed in a two-dimensional plane, and short carbon fibers (A) were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 6)

A porous electrode substrate was obtained in the same manner as in Example 1, except that short precursor fibers (b) that undergo oxidation were not used, and the mass ratio of short carbon fibers (A) and fibrillar precursor fibers (b') that undergo oxidation in the paper-making slurry was 70:30. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 7)

A porous electrode substrate was obtained in the same manner as in Example 6, except that polyacrylonitrile-based pulp ($b_1$') fabricated by jet solidification in which a large number of fibrils having a diameter of 3 $\mu$m or less branched from fibrous stems was used as fibrillar precursor fibers (b') that undergo oxidation. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 8)

A porous electrode substrate was obtained in the same manner as in Example 1, except that the pressurized water flow jet pressure was 3 MPa (the nozzle 1), a pressure of 4 MPa (the nozzle 2), and a pressure of 3 MPa (the nozzle 3). The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 9)

A porous electrode substrate was obtained in the same manner as in Example 1, except that the target basis weight of the precursor sheet was 60 g/m$^2$. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 10)

(1) Production of Membrane Electrode Assembly (MEA)

Two of the porous electrode substrates obtained in Example 1 were prepared as porous electrode substrates for a cathode and an anode. In addition, a laminate was prepared in which a catalyst layer (catalyst layer area: 25 cm$^2$, the amount of Pt adhered: 0.3 mg/cm$^2$) composed of catalyst-supporting carbon (catalyst: Pt, the amount of the catalyst supported: 50% by mass) was formed on both surfaces of a perfluorosulfonic acid-based polymer electrolyte membrane (membrane thickness: 30 $\mu$m). This laminate was interposed between the porous carbon electrode substrates for a cathode and an anode, and these were joined to obtain a MEA.

(2) Evaluation of Fuel Cell Characteristics of MEA

The obtained MEA was interposed between two carbon separators having a bellows-like gas flow path to form a polymer electrolyte fuel cell (unit cell).

The fuel cell characteristics were evaluated by measuring the current density-voltage characteristics of this unit cell. Hydrogen gas was used as the fuel gas, and air was used as the oxidizing gas. The temperature of the single cell was 80°C, the fuel gas utilization rate was 60%, and the oxidizing gas utilization rate was 40%. In addition, the humidification of the fuel gas and the oxidizing gas was performed by passing the fuel gas and the oxidizing gas through bubblers at 80°C, respectively. As a result, the cell voltage of the fuel cell at a current density of 0.8 A/cm$^2$ was 0.584 V, and the internal resistance of the cell was 4.8 m$\Omega$, and the fuel cell exhibited good characteristics.

(Example 11)

A paper-making slurry was prepared so that the mass ratio of short carbon fibers (A), short precursor fibers (b) that undergo oxidation, and fibrillar precursor fibers (b') that undergo oxidation in the paper-making slurry was 80:10:10, and the target basis weight of the precursor sheet was 55 g/m$^2$. In addition, ketjen black (manufactured by Lion Corporation) and pyrolytic graphite (trade name: PC-H, manufactured by Ito Kokuen Co., Ltd.) as carbon powder, polytetrafluoroethylene particles (trade name: FluonPTFE Lubricant L172J, manufactured by Asahi Glass Co., Ltd.) as the fluorine-based resin, and polyoxyethylene octyl phenyl ether as the dispersant were prepared. A dispersion of a mixture of carbon powder and fluorine-based resin was prepared so that the ketjen black, the pyrolytic graphite, the fluorine-based resin, and the dispersant were 6.3% by mass, 0.7% by mass, 4.5% by mass, and 5.0% by mass, respectively. Besides these conditions, a porous electrode substrate was manufactured in the same manner as in Example 1. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 12)

A porous electrode substrate was obtained in the same manner as in Example 11, except that polyacrylonitrile-based pulp (b$_1$') fabricated by jet solidification in which a large number of fibrils having a diameter of 3 $\mu$m or less branched from fibrous stems was used as fibrillar precursor fibers (b') that undergo oxidation. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 13)

A porous electrode substrate was obtained in the same manner as in Example 11, except that the paper-making slurry was prepared so that the mass ratio of short carbon fibers (A), short precursor fibers (b) that undergo oxidation, and fibrillar precursor fibers (b') that undergo oxidation in the paper-making slurry was 70:10:20, and the target basis weight of the precursor sheet was 50 g/m$^2$. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 14)

A porous electrode substrate was obtained in the same manner as in Example 1, except that short precursor fibers (b) that undergo oxidation were not used, the paper-making slurry was prepared so that the mass ratio of short carbon fibers (A) and fibrillar precursor fibers (b') that undergo oxidation in the paper-making slurry was 80:20, the dispersion of the mixture of carbon powder and fluorine-based resin was prepared so that ketjen black, pyrolytic graphite, the fluorine-based resin, and the dispersant were 4.2% by mass, 1.8% by mass, 6.0% by mass, and 3.0% by mass, respectively, and the heat treatment temperature was 300°C. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 15)

A porous electrode substrate was obtained in the same manner as in Example 14, except that ketjen black (manufactured by Lion Corporation) and spherical graphite (trade name: SG-BH8, manufactured by Ito Kokuen Co., Ltd.) as carbon powder, polytetrafluoroethylene particles (trade name: FluonPTFE Lubricant L172J, manufactured by Asahi Glass Co., Ltd.) as fluorine-based resin, and polyoxyethylene octyl phenyl ether as the dispersant were prepared, the dispersion of the mixture of carbon powder and fluorine-based resin was prepared so that the ketjen black, the spherical graphite, the fluorine-based resin, and the dispersant were 5.6% by mass, 1.4% by mass, 6.0% by mass, and 5.5% by mass, respectively, and the heat treatment temperature was 330°C. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 16)

A porous electrode substrate was obtained in the same manner as in Example 14, except that the target basis weight of the precursor sheet was 50 g/m$^2$, the dispersion of the mixture of carbon powder and fluorine-based resin was prepared so that the ketjen black, the spherical graphite, the fluorine-based resin, and the dispersant were 5.6% by mass, 2.4% by mass, 6.0% by mass, and 6.0% by mass, respectively, and the heat treatment temperature was 360°C. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 17)

A porous electrode substrate was obtained in the same manner as in Example 14, except that ketjen black (manufactured by Lion Corporation) and pyrolytic graphite (trade name: PC-H, manufactured by Ito Kokuen Co., Ltd.) as carbon powder, a tetrafluoroethylene-hexafluoropropylene copolymer particle dispersion (trade name: FEP Dispersion 120-JR, manufactured by Du Pont-Mitsui Fluorochemicals Co., Ltd.) as fluorine-based resin, and polyoxyethylene octyl phenyl ether as the dispersant were prepared, the dispersion of the mixture of carbon powder and fluorine-based resin was prepared so that the ketjen black, the pyrolytic graphite, the fluorine-based resin, and the dispersant were 6.3% by mass, 0.7% by mass, 6.0% by mass, and 3.5% by mass, respectively, and the heat treatment temperature was 330°C. The obtained porous electrode substrate had no in-plane shrinkage during heat treatment, good gas permeability, good thickness and good through-plane electric resistance. In the obtained porous electrode substrate, short carbon fibers (A) dispersed in the three-dimensional structure were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Example 18)

The fuel cell characteristics were evaluated in the same manner as in Example 10, except that the porous electrode substrate obtained in Example 17 was used. As a result, the cell voltage of the fuel cell at a current density of 0.8 A/cm$^2$ was 0.536 V, and the internal resistance of the cell was 7.0 mΩ, and the fuel cell exhibited good characteristics.

(Comparative Example 1)

A porous electrode substrate was obtained in the same manner as in Example 1, except that the entanglement treatment by pressurized water flow jet was not performed. The obtained porous electrode substrate had no in-plane shrinkage during heat treatment, and had good gas permeability and good thickness, but had higher through-plane electric resistance than Example 1. In the obtained porous electrode substrate, short carbon fibers (A) were in a state of being dispersed in a two-dimensional plane, and short carbon fibers (A) were joined together via oxidized fibers (B), and further, short carbon fibers (A) and oxidized fibers (B) were joined together via carbon powder and fluorine-based resin. When a compressive load at a surface pressure of 1.5 MPa was applied to this porous electrode substrate, the sheet form was maintained. The composition and evaluation results of the porous electrode substrate are shown in Table 1.

(Comparative Example 2)

A porous electrode substrate was obtained in the same manner as in Example 1, except that the precursor sheet was heat treated without being impregnated with the dispersion of the mixture of carbon powder and fluorine-based resin. The obtained porous electrode substrate had no in-plane shrinkage during heat treatment, and had good gas permeability and good thickness, but had higher through-plane electric resistance than Example 1. In the obtained porous electrode substrate, short carbon fibers (A) dispersed in the three-dimensional structure were joined together only via oxidized fibers (B). When a compressive load at a surface pressure of 1.5 MPa was applied to this porous electrode substrate, the sheet form was maintained. The composition and evaluation results of the porous electrode substrate are shown in Table 1.

(Comparative Example 3)

A porous electrode substrate was obtained in the same manner as in Example 5, except that short polyvinyl alcohol (PVA) fibers having an average fiber length of 3 mm (trade name: VBP105-1, manufactured by Kuraray Co., Ltd.), as fibers that disappeared during heat treatment, were used instead of fibrillar precursor fibers (b') that undergo oxidation. The obtained porous electrode substrate had no in-plane shrinkage during heat treatment, and had good gas permeability, good thickness, and good through-plane electric resistance. In the obtained porous electrode substrate, short carbon fibers (A) dispersed in the three-dimensional structure were joined together only via carbon powder and fluorine-based resin. When a compressive load at a surface pressure of 1.5 MPa was applied to this porous electrode substrate, the sheet form could not be maintained. The composition and evaluation results of the porous electrode substrate are shown in Table 1.

[Table 1]

Table 1-1

| | | | Example | | | | | | | | | Comparative Example | | |
|---|---|---|---|---|---|---|---|---|---|---|---|---|---|---|---|
| | | | 1 | 2 | 3 | 4 | 5 | 6 | 7 | 8 | 9 | 1 | 2 | 3 |
| Short carbon fibers (A) | | parts by mass | 50 | 50 | 50 | 50 | 50 | 70 | 70 | 50 | 50 | 50 | 50 | 70 |
| Short precursor fibers (b) that undergo oxidation | | parts by mass | 30 | 30 | 30 | 30 | 30 | - | - | 30 | 30 | 30 | 30 | - |
| Fibrillar precursor fibers (b') that undergo oxidation | (b$_1$') | parts by mass | - | - | - | - | - | - | 30 | - | - | - | - | - |
| | (b$_2$') | parts by mass | 20 | 20 | 20 | 20 | 20 | 30 | - | 20 | 20 | 20 | 20 | - |
| Short PVA fibers | | parts by mass | - | - | - | - | - | - | - | - | - | - | - | 30 |
| Basis weight of precursor sheet | | g/m$^2$ | 40 | 40 | 40 | 40 | 40 | 39 | 40 | 40 | 61 | 40 | 40 | 39 |
| Concentration of carbon powder | | % by mass | 4 | 4 | 4 | 4 | 4 | 4 | 4 | 4 | 4 | 4 | - | 4 |
| Concentration of carbon black | | % by mass | 4 | 4 | 4 | 4 | 4 | 4 | 4 | 4 | 4 | 4 | - | 4 |
| Concentration of graphite | | %by mass | - | - | - | - | - | - | - | - | - | - | - | - |
| Type of graphite | | | - | - | - | - | - | - | - | - | - | - | - | - |
| Concentration of fluorine-based resin | | % bby mass | 3 | 4 | 2 | 3 | 3 | 3 | 3 | 3 | 3 | 3 | - | 3 |
| Type of fluorine-based resin | | | D | D | D | D | D | D | D | D | D | D | D | D |
| The number of times of impregnation | | times | 1 | 1 | 1 | 2 | 3 | 1 | 1 | 1 | 1 | 1 | - | 1 |
| Heat treatment temperature after impregnation and dying | | °C | 360 | 360 | 360 | 360 | 360 | 360 | 360 | 360 | 360 | 360 | 360 | 360 |

(continued)

| Porous electrode substrate | | | Example | | | | | | | | | Comparative Example | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| | Basis weight | g/m$^2$ | 55 | 54 | 56 | 68 | 76 | 53 | 54 | 55 | 83 | 55 | 40 | 44 |
| | Content of oxidized fibers (B) | % by mass | 48 | 48 | 48 | 48 | 48 | 29 | 30 | 48 | 48 | 48 | 48 | 0 |
| | Thickness | mm | 137 | 141 | 139 | 142 | 141 | 134 | 145 | 144 | 209 | 138 | 136 | 119 |
| | Gas permeability | ml/hr/cm$^2$/mmAg | 6000 | 7800 | 5500 | 2500 | 600 | 4300 | 3900 | 5800 | 4100 | 5500 | 13000 | 8900 ; |
| | Through-plane electric resistance | mW.cm$^2$ | 26.1 | 35.4 | 21.9 | 15.5 | 12.5 | 21.2 | 20.7 | 22.3 | 39.1 | 55.1 | 320 | 41.2 |

Table 1-2

| | | | Example | | | | | | |
|---|---|---|---|---|---|---|---|---|---|
| | | | 11 | 12 | 13 | 14 | 15 | 16 | 17 |
| Short carbon fibers (A) | | parts by mass | 80 | 80 | 70 | 80 | 80 | 80 | 80 |
| Short precursor fibers (b) that undergo oxidation | | parts by mass | 10 | 10 | 10 | - | - | - | - |
| Fibrillar precursor fibers (b') that undergo oxidation | (b$_1$') | parts by mass | - | 10 | - | - | - | - | - |
| | (b$_2$') | parts by mass | 10 | - | 20 | 20 | 20 | 20 | 20 |
| Short PVA fibers | | parts by mass | - | - | - | - | - | - | - |
| Basis weight of precursor sheet | | g/m$^2$ | 52 | 55 | 48 | 40 | 39 | 47 | 43 |
| Concentration of carbon powder | | % by mass | 7 | 7 | 7 | 6 | 7 | 8 | 7 |
| Concentration of carbon black | | % by mass | 6.3 | 6.3 | 6.3 | 4.2 | 5.6 | 5.6 | 6.3 |
| Concentration of graphite | | % by mass | 0.7 | 0.7 | 0.7 | 1.8 | 1.4 | 2.4 | 0.7 |
| Type of graphite | | | P | P | P | P | S | S | P |
| Concentration of fluorine-based resin | | % by mass | 4.5 | 4.5 | 4.5 | 6 | 6 | 6 | 6 |
| Type of fluorine-based resin | | | L | L | L | L | L | L | D' |
| The number of times of impregnation | | times | 1 | 1 | 1 | 1 | 1 | 1 | 1 |
| Heat treatment temperature after impregnation and drying | | °C | 360 | 360 | 360 | 300 | 330 | 360 | 330 |
| Porous electrode substrate | Basis weight | g/m$^2$ | 74 | 86 | 92 | 65 | 65 | 79 | 71 |
| | Content of oxidized fibers (B) | % by mass | 18 | 19 | 28 | 19 | 19 | 19 | 19 |
| | Thickness | mm | 252 | 313 | 295 | 222 | 212 | 257 | 247 |
| | Gas permeability | ml/hr/cm$^2$/mmAq | 7900 | 8600 | 7300 | 10200 | 8100 | 13400 | 9000 |
| | Through-plane electric resistance | mW·cm$^2$ | 24.5 | 30.7 | 25.3 | 29.8 | 25.2 | 22.9 | 20.7 |

\* (b$_1$'): a polyacrylonitrile-based pulp in which a large number of fibrils branch
\* (b$_2$'): splittable acrylic sea-island composite short fibers composed of an acrylic polymer and cellulose acetate that will be fibrillated by beating
\* P: pyrolytic graphite, S: spherical graphite
\* D: polytetrafluoroethylene particle dispersion
\*D': tetrafluoroethylene-hexafluoropropylene copolymer partice dispersion
\*L: polytetrafluoroethylen particles

## Claims

1. A method for producing a porous electrode substrate, comprising:

a step (1) of producing a precursor sheet comprising short carbon fibers (A), and one or more types of short precursor fibers (b) that undergo oxidation and/or one or more types of fibrillar precursor fibers (b') that undergo oxidation, all of which are dispersed in a two-dimensional plane;

a step (2) of subjecting the precursor sheet to entanglement treatment to form a three-dimensional entangled structure;

a step (3) of impregnating the precursor sheet, in which the three-dimensional entangled structure is formed, with carbon powder and fluorine-based resin; and

a step (4) of heat treating the precursor sheet at a temperature of 150°C or higher and lower than 400°C.

2. The method for producing a porous electrode substrate according to claim 1, further comprising a step (5) of hot press forming the precursor sheet at a temperature lower than 200°C after said step (2) and before said step (3).

3. The method for producing a porous electrode substrate according to claim 1 or 2, further comprising a step (6) of subjecting the precursor sheet to drying treatment at a temperature of 70°C or higher and lower than 150°C after said step (3) and before said step (4).

4. The method for producing a porous electrode substrate according to any of claims 1 to 3, wherein the carbon powder contains carbon black.

5. The method for producing a porous electrode substrate according to claim 4, wherein the carbon black is ketjen black.

6. The method for producing a porous electrode substrate according to any of claims 1 to 5, wherein the carbon powder contains a graphite powder.

7. A porous electrode substrate comprising a three-dimensional entangled structure, wherein short carbon fibers (A) dispersed in said three-dimensional structure are joined together via oxidized fibers (B), and wherein said short carbon fibers (A) and said oxidized fibers (B) are further joined together via carbon powder and fluorine-based resin.

8. A membrane electrode assembly using a porous electrode substrate according to claim 7.

9. A polymer electrolyte fuel cell using a membrane electrode assembly according to claim 8.

**Patentansprüche**

1. Verfahren zur Herstellung eines porösen Elektrodenträgermaterials, umfassend:

einen Schritt (1) der Herstellung eines Vorläuferbogens umfassend kurze Kohlenstofffasern (A), und eine oder mehrere Arten von kurzen Vorläuferfasern (b), die einer Oxidierung unterliegen, und/oder eine oder mehrere Arten von feinfaserigen Vorläuferfasern (b') die einer Oxidierung unterliegen, von denen alle in einer zweidimensionalen Ebene dispergiert sind;

einen Schritt (2), in dem der Vorläuferbogen einer Verfilzungsbehandlung unter Ausbildung einer dreidimensional verfilzten Struktur unterzogen wird;

einen Schritt (3), in dem der Vorläuferbogen, in dem die dreidimensional verfilzte Struktur gebildet wird, mit Kohlenstoffpulver und einem Fluorharz imprägniert wird; und

einen Schritt (4), in dem der Vorläuferbogen einer Wärmebehandlung bei einer Temperatur von 150°C oder mehr und weniger als 400°C unterzogen wird.

2. Verfahren zur Herstellung eines porösen Elektrodenträgermaterials gemäß Anspruch 1, weiterhin umfassend einen Schritt (5) des Heisspressformens des Vorläuferbogens bei einer Temperatur von weniger als 200°C, nach Schritt (2) und vor Schritt (3).

3. Verfahren zur Herstellung eines porösen Elektrodenträgermaterials gemäß Anspruch 1 oder 2, zusätzlich umfassend einen Schritt (6), nach Schritt (3) und vor Schritt (4), in dem der Vorläuferbogen bei einer Temperatur von 70°C oder mehr und weniger als 150°C einer Trocknungsbehandlung unterzogen wird.

4. Verfahren zur Herstellung eines porösen Elektrodenträgermaterials gemäß einem der Ansprüche 1 bis 3, wobei das Kohlenstoffpulver Ruß enthält.

5. Verfahren zur Herstellung eines porösen Elektrodenträgermaterials gemäß Anspruch 4, wobei der Ruß Ketjenblack ist.

6. Verfahren zur Herstellung eines porösen Elektrodenträgermaterials gemäß einem der Ansprüche 1 bis 5, wobei das Kohlenstoffpulver Graphitpulver enthält.

7. Poröses Elektrodenträgermaterial, umfassend eine dreidimensional verfilzte Struktur, wobei kurze, in der dreidimensionalen Struktur dispergierte Kohlenstofffasern (A) miteinander durch oxidierte Fasern (B) verbunden sind, und wobei die kurzen Kohlenstofffasern (A) und die oxidierten Fasern (B) zusätzlich miteinander durch Kohlenstoffpulver und ein Fluorharz verbunden sind.

8. Membranelektrodenbaugruppe, die das poröse Elektrodenträgermaterial gemäß Anspruch 7 verwendet.

9. Polymerelektrolytbrennstoffzelle, welche die Membranelektrodenbaugruppe gemäß Anspruch 8 verwendet.

**Revendications**

1. Procédé de fabrication d'un substrat d'électrode poreux, comprenant :

   une étape (1) de fabrication d'une feuille de précurseur comprenant des fibres de carbone courtes (A), et un ou plusieurs types de fibres de précurseur courtes (b) qui subissent une oxydation et/ou un ou plusieurs types de fibres de précurseur fibrillaires (b') qui subissent une oxydation, toutes étant dispersées dans un plan en deux dimensions ;
   une étape (2) de soumission de la feuille de précurseur à un traitement d'enchevêtrement afin de former une structure enchevêtrée tridimensionnelle ;
   une étape (3) d'imprégnation de la feuille de précurseur, au cours de laquelle la structure enchevêtrée tridimensionnelle est formée, avec de la poudre de carbone et une résine à base de fluor ; et
   une étape (4) de traitement thermique de la feuille de précurseur à une température de 150 °C ou plus et inférieure à 400 °C.

2. Procédé de fabrication d'un substrat d'électrode poreux selon la revendication 1, comprenant en outre une étape (5) de formage sous presse à chaud de la feuille de précurseur à une température inférieure à 200 °C après ladite étape (2) et avant ladite étape (3).

3. Procédé de fabrication d'un substrat d'électrode poreux selon la revendication 1 ou 2, comprenant en outre une étape (6) de soumission de la feuille de précurseur à un traitement de séchage à une température de 70 °C ou plus et inférieure à 150 °C après ladite étape (3) et avant ladite étape (4).

4. Procédé de fabrication d'un substrat d'électrode poreux selon l'une quelconque des revendications 1 à 3, dans lequel la poudre de carbone contient du noir de carbone.

5. Procédé de fabrication d'un substrat d'électrode poreux selon la revendication 4, dans lequel le noir de carbone est le noir Ketjen.

6. Procédé de fabrication d'un substrat d'électrode poreux selon l'une quelconque des revendications 1 à 5, dans lequel la poudre de carbone contient une poudre de graphite.

7. Substrat d'électrode poreux comprenant une structure enchevêtrée tridimensionnelle, dans lequel des fibres de carbone courtes (A) dispersées dans ladite structure tridimensionnelle sont jointes ensemble par le biais de fibres oxydées (B), et dans lequel lesdites fibres de carbone courtes (A) et lesdites fibres oxydées (B) sont en outre jointes ensemble par le biais de la poudre de carbone et de la résine à base de fluor.

8. Ensemble d'électrodes à membrane utilisant un substrat d'électrode poreux selon la revendication 7.

9. Pile à combustible à électrolyte polymérique utilisant un ensemble d'électrodes à membrane selon la revendication 8.

FIG.1

100 μm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080268297 A
- WO 2001056103 A
- WO 2002042534 A
- JP 2007273466 A
- JP 2008503043 A